Europäisches Patentamt

European Patent Office

Office européen des brevets

(11) Publication number: **0 303 324**
**A1**

## (12) EUROPEAN PATENT APPLICATION

(21) Application number: 88201687.6

(22) Date of filing: 04.08.88

(51) Int. Cl.⁴: **H01F 1/14 , H01F 41/18 , H01F 10/16 , G11B 5/31**

(30) Priority: 10.08.87 NL 8701872

(43) Date of publication of application:
15.02.89 Bulletin 89/07

(84) Designated Contracting States:
DE FR GB IT NL

(71) Applicant: **N.V. Philips' Gloeilampenfabrieken**
**Groenewoudseweg 1**
**NL-5621 BA Eindhoven(NL)**

(72) Inventor: **Brouha, Marcel**
**c/o INT. OCTROOIBUREAU B.V. Prof.**
**Holstlaan 6**
**NL-5656 AA Eindhoven(NL)**
Inventor: **Dirne, Franciscus Wilhelmus**
**Adrianus**
**c/o INT. OCTROOIBUREAU B.V. Prof.**
**Holstlaan 6**
**NL-5656 AA Eindhoven(NL)**
Inventor: **Daams, Johannes Lambertus**
**Cornelis**
**c/o INT. OCTROOIBUREAU B.V. Prof.**
**Holstlaan 6**
**NL-5656 AA Eindhoven(NL)**
Inventor: **Witmer, Cornelis Henricus Maria**
**c/o INT. OCTROOIBUREAU B.V. Prof.**
**Holstlaan 6**
**NL-5656 AA Eindhoven(NL)**
Inventor: **Turk, Gijsbertus Wilhelmus**
**c/o INT. OCTROOIBUREAU B.V. Prof.**
**Holstlaan 6**
**NL-5656 AA Eindhoven(NL)**
Inventor: **van der Borst, Albertus Johannes**
**Cornelis**
**c/o INT. OCTROOIBUREAU B.V. Prof.**
**Holstlaan 6**
**NL-5656 AA Eindhoven(NL)**

(74) Representative: **Auwerda, Cornelis Petrus et**
**al**
**INTERNATIONAAL OCTROOIBUREAU B.V.**
**Prof. Holstlaan 6**
**NL-5656 AA Eindhoven(NL)**

(54) Magnetic material, method of manufacturing this material and a magnetic head provided with this material.

(57) A crystalline magnetic material of the CoFeB    type is described. This material which is provided by

means of sputtering has a high saturtion magnetiz-
ation (upto 2T) and a large relative permeability
(upto 2.000 in a frequency range upto 20 MHz) and
a small coercive force (smaller than 40 A/m). The
magnetic material in accordance with the invention
can very suitably be used in magnetic heads for
information processing in magnetic recording media
having a high information density.

FIG.1

**"Magnetic material, method of manufacturing this material and a magnetic head provided with this material."**

The invention relates to magnetic material of the CoFeB type. The invention further relates to a method of manufacturing this material. The invention also relates to a magnetic head provided with this material.

Alloys of the type mentioned in the opening paragraph are known from, inter alia , German Offenlegungsschrift no. 28.06.052. This literature reference describes, more in particular, CoFeSiB alloys which are used in magnetic heads on account of their soft magnetic properties. The soft magnetic properties are attributed to and connected with the amorphous character of these alloys. The essential amorphous structure is obtained by a suitable choice of the mutual weight ratios of the component elements relative to one another, in particular, the sum of the Si content and B content having to amount to at least approximately 20 mol%. If this content is less than approximately 20 mol%, the amorphous magnetic material contains crystalline inclusions which leads to a substantial decrease in magnetic quality. In particular, the relative permeability decreases substantially.

The above-mentioned, known amorphous magnetic material has the disadvantage that its saturation magnetization ($B_s$) has a maximum value of approximately 1 Tesla. This means that magnetic heads which are provided with the known amorphous material have a limited recording capacity. Consequently, such magnetic heads cannot be used optimally in magnetic recording media such as magnetic tapes or discs wich have a large coercive force and, which can hence, suitably be used to attain a high information density.

It is an object of the invention to provide a magnetic material having a very high saturisation magnetization and which can suitably be used, in particular in magnetic heads for recording, erasing and reading information on magnetic recording media having a large coercive force.

A further object of the invention is to provide a magnetic material having a large relative permeability (larger than 1.000 in a frequency range up to 20 MHz) to ensure that when this material is used in a magnetic head, the head has suitable read properties.

Another object of the invention is to provide a magnetic material having a small coercive force (smaller than 40 A/m).

These objects are achieved by means of a material of the type mentioned in the opening paragraph, which is characterized in that the magnetic material is crystalline and has a composition which satisfies the formula $Co_aFe_bB_cM'_dM''_e$,

wherein $M'$ is one or more of the elements selected from the group consisting of Ti, Zr, Hf, V, Nb, Ta, Cr, Mo, W, Mn, and Ru, $M''$ is one or more of the elements selected from the group consisting of Al, Si, P and C, and a, b, c, d and e represent the molar fractions of the relative element in the composition, wherein

$0.50 < a < 0.97$

$0.01 < b < 0.20$

$0.02 < c < 0.10$

$0.00 \leq d < 0.10$

$0.00 \leq e < 0.10$

$0.02 < c + e < 0.10$

$a + b + c + d + e = 1.00$.

In contrast with the prevailing view that in magnetic material of the CoFeB type relatively favourable magnetic properties can only be obtained if the structure is, amorphous, it has been found that a specific magnetic material, of the above-mentioned composition, having a crystalline structure has better magnetic properties. For example, the magnetic material in accordance with the invention has a surprisingly high saturation magnetization (up to 2 Tesla) in combination with a high relative permeability (up to 2.000) and a low coercive force. For this reason, the material can particularly suitably be used in magnetic heads.

The transition metals Co and Fe form the basis of the magnetic character of the material in accordance with the invention. If desired, one or more elements $M'$, selected from the group consisting of Ti, Zr, Hf, V, Nb, Ta, Cr, Mo, W, Mn and Ru, may be added. The presence of these elements $M'$ has an influence on, in particular, the mechanical properties of the material. As a result of this the resistance to wear and corrosion is improved. Further, the addition of Mn reduces the value of the magnetostriction. However, the $M'$ content must not exceed 10 mol% because otherwise the saturation magnetization is adversely influenced.

The B content in the magnetic material is of substantial importance for obtaining a proper crystalline structure. The above-mentioned suitable magnetic properties are only obtained if the material has this suitable crystalline structure. It has been found that if less than 2 mol% of B is present in the material no proper crystalline magnetic material is obtained. However, the total content (c + e) of B and $M''$(B, Al, Si, C and D) must not exceed 10 mol% because otherwise the saturation magnetization of the material is adversely affected.

In a favourable embodiment of the magnetic material in accordance with the invention, the total content of B and $M'$(c + e) is between 3 and 6 mol%. The highest degrees of saturation magnetization are attained if material is used which corresponds to this composition.

In another preferred embodiment of the invention the content (c) of the element B in the material composition exceeds the content (e) of the element $M''$ (Al, Si, P and C).

invention further relates to a method of manufacturing the magnetic material as indicated in Claim 1, 2 or 3, the component elements being sputtered on a substrate in a quantity corresponding to the indicated molar fractions at a deposition temperature which is below 100° C. It has been found that the material applied by means of this sputtering process is composed of crystallites having a cubic (fcc) structure, wherein the <1,1,1>, axis extends perpendicularly or substantially perpendicularly to the substrate surface. The strong texture is of great importance for obtaining a material having satisfactory soft magnetic properties, which texture depends to a large extent on the sputtering conditions. For example, it has been found that if the substrate temperature exceeds 100° C, hexagonal phases are formed in the cubic structure. This adversely affects the magnetic properties of the material.

In a favourable embodiment, a small component of the magnetic anisotropy is present in the plane of the film. This is achieved by applying a magnetic field to the plane of the film during the sputtering operation.

The invention also relates to a magnetic head the core portion of which consists of a crystalline magnetic material having a composition which corresponds to the formula

$Co_aFe_bB_cM'_dM''_e$, wherein
$M'$ is one or more of the elements selected from the group consisting of Ti, Zr, Hf, V, Nb, Ta, Cr, Mo, W, Mn and Ru;
$M''$ is one or more of the elements selected from the group formed by Al, Si, P and C,
a, b, c, d and e represent the molar fractions of the relevant element in the material composition, wherein
$0.50 < a < 0.97$
$0.01 < b < 0.20$
$0.02 < c < 0.10$
$0.00 \leq d < 0.10$
$0.00 \leq e < 0.10$
$0.02 < c + e < 0.10$
$a + b + c + d + e = 1.00$.
In a favourable embodiment of the magnetic head $0.03 < c + e < 0.06$.
In a further favourable embodiment of the magnetic head $c > e$.
The invention will now be explained in more detail by means of exemplary embodiments and with reference to a drawing, in which
Fig. 1 shows hysteresis curves for the easy and the hard direction of magnetization,
Fig. 2 shows a frequency characteristic of the lity in the direction of the hard axis.
Fig. 3 is a front view of a magnetic head provided with the magnetic material in accordance with the invention.

Example 1:

Thin films of $Co_{85}Fe_6B_6Si_2$ having a thickness of approximately $1\mu m$, were provided on a glass substrate by means of sputtering, the temperature being lower than 100° C. The background pressure in the sputtering bell was $2.10.^{-6}$ Torr, the pressure of the sputtering gas (argon) amounting to $5.10^{-3}$ Torr. The sputtering rate was 180A/m. The plasma was concentrated by means of an axial magnetic field of approximately 1100 Å/m. A small component of this magnetic field was present in the plane of the substrate holder.

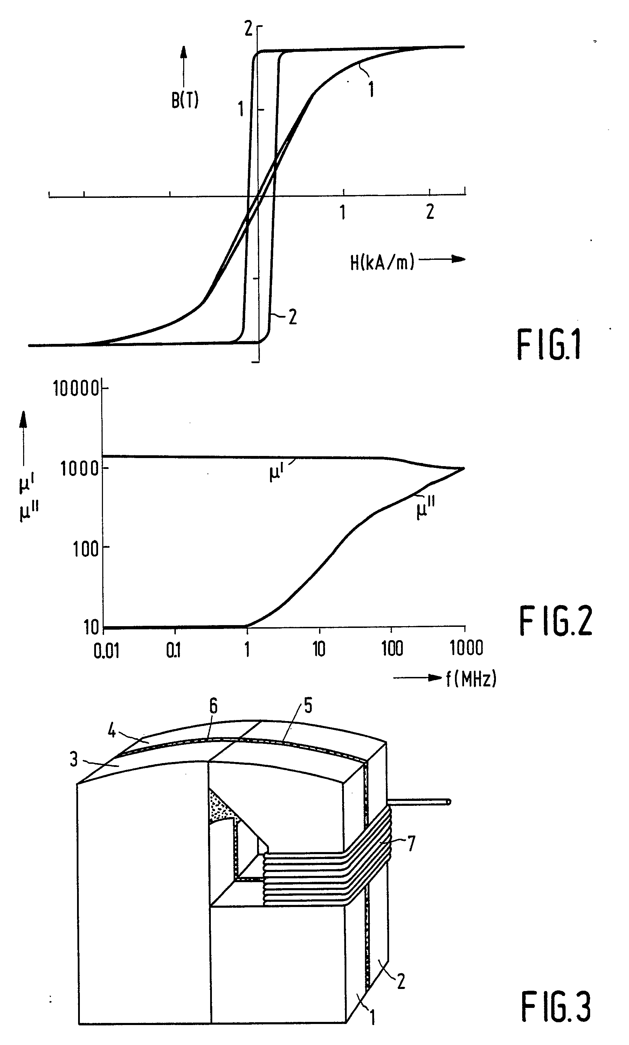

The following magnetic properties were measured on the sputtered material. A saturation magnetization $(B_s)$ of 1.6 Tesla, a coercive force of 30 A/m along the hard axis and a coercive force of 80 A/m along the easy axis. Fig. 1 shows the hysteresis (B-H) curves of the said material. In Fig. 1, reference numeral 1 denotes the curve measured along the hard axis, and reference numeral 2 denotes the curve measured along the easy axis. The above-mentioned coercive forces can be derived from this Figure. Fig. 2 shows the frequency characteristic of the permeability of thesputtered material. In said Figure, $\mu'$ and $\mu''$ represent the real and the imaginary permeability, respectively. The permeability is measured along the hard axis. It has been found that if eddy currents are disregarded a constant permeability of approximately 1200 is possible in a frequency region up to 100 MHz.

Example 2:

Thin films of $Co_{86.5}Fe_3Mn_{2.5}B_6Si_2$, having a thickness of approximately $1\mu m$, were provided on a substrate, in accordance with the method described in example 1. A saturation magnetization $B_s$ of 1.5 Tesla, a coercive force $H_c$ of 24 A/m and a permeability $\mu$ of 700 was measured on this material. The magnetostriction value $\lambda_s$ of this material was small: below $1.10^{-6}$.

Fig. 3 shows a magnetic head of the sandwich type, which is provided with the magnetic material in accordance with the invention. In Fig. 3, the magnetic head consists of two halves which both consist of two substrates 1, 2 and 3, 4 respectively, which may be made of glass. A core portion 5, 6, respectively, of the magnetic material in accordance with the invention is provided between the substrates. The core portion 5 is surrounded by a coil 7 through which an electric record, read or erase signal is passed. However, the use of the magnetic material in accordance with the invention is not limited to this type of magnetic head.

## Claims

1. A magnetic material of the CoFeB type, characterized in that the magnetic material is crystalline and has a composition which corresponds to the formula

$Co_a Fe_b B_c M'_d M''_e$, wherein

$M'$ is one or more of the elements selected from the group formed by Ti, Zr, Hf, V, Nb, Ta, Cr, Mo, W, Mn and Ru;
$M''$ is one or more of the elements selected from the group formed by Al, Si, P and C,
a, b, c, d and e are the molar fractions of the relevant element in the material composition, wherein
$0.50 < a < 0.97$
$0.01 < b < 0.20$
$0.02 < c < 0.10$
$0.00 \leq d < 0.10$
$0.00 \leq e < 0.10$
$0.02 < c + e < 0.10$
$a + b + c + d + e = 1.00$

1. A magnetic material as claimed in Claim 1, characterized in that $0.03 < c + e < 0.06$.

3. A magnetic material as claimed in Claim 1 or 2, characterized in that $c > e$.

4. A method of manufacturing the magnetic material as indicated in Claim 1, 2 or 3, the component elements being sputtered on a substrate in a quantity corresponding to the indicated molar fractions at a deposition temperature below 100° C.

5. A method as claimed in Claim 4, characterized in that during the sputtering process a magnetic field is applied to the plane of the substrate.

6. A magnetic head the core portion of which consists of crystalline magnetic material having a composition which corresponds to the formula

$Co_a Fe_b B_c M'_d M''_e$, wherein

$M'$ is one or more of the elements selected from the group formed by Tu, Zr, Hf, V, Nb, Ta, Cr, Mo, W, Mn and Ru;
$M''$ is one or more of the elements selected from the group formed by Al, Si, P and C,
a, b, c, d and e represent the molar fractions of the relevant element in the material composition, wherein
$0.50 < a < 0.97$
$0.01 < b < 0.20$
$0.02 < c < 0.10$
$0.00 \leq d < 0.10$
$0.00 \leq e < 0.10$
$0.02 < c + e < 0.10$
$a + b + c + d + e = 1.00$.

7. A magnetic head as claimed in Claim 6, characterized in that $0.03 < c + e < 0.06$.

8. A magnetic head as claimed in Claim 6, characterized in that $c > e$.

FIG.1

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | JAPANESE JOURNAL OF APPLIED PHYSICS, vol. 18, no. 5, May 1979, pages 937-941; K.INOMATA et al.: "Substituted amorphous Co-Fe-Si-B alloys" * Page 938, paragraph 2; figure 1 * | 1,3 | H 01 F 1/14 H 01 F 41/18 H 01 F 10/16 G 11 B 5/31 |
| A | US-A-4 411 716 (K.SHIIKI et al.) * Conclusions 1,11; page 5, lines 16-23 * | 1,6 | |
| A | EP-A-0 084 138 (ALLIED CORP.) * Conclusion 1 * | 1 | |
| A | GB-A-2 016 528 (IBM) * Conclusions 1,2,7,24,25 * | 1,4,5 | |
| A | EP-A-0 135 118 (RESEARCH DEVELOPMENT CORPORATION OF JAPAN) * Conclusions 1,4,5; page 10, table 1 * | 1,4 | |
| | | | TECHNICAL FIELDS SEARCHED (Int. Cl.4) |
| | | | H 01 F |

The present search report has been drawn up for all claims

| Place of search | Date of completion of the search | Examiner |
|---|---|---|
| THE HAGUE | 04-11-1988 | DECANNIERE L.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)